# EUROPÄISCHE PATENTANMELDUNG

(11) **EP 2 136 333 A2**
(43) Veröffentlichungstag der Anmeldung: **23.12.2009**
(21) Anmeldenummer: 08105819.0
(22) Anmeldetag: 19.11.2008
(51) Int. Cl.: G06T 7/00

(54) **Bilddatenverarbeitungsverfahren**

(30) Priorität: 20.06.2008 DE 102008002567
(71) Anmelder: ROBERT BOSCH GMBH, 70442 Stuttgart (DE)
(72) Erfinder: Simon, Stephan, 31079, Sibbesse (DE)

(57) **Zusammenfassung**

Die Erfindung betrifft ein Verfahren, ein Computerprogramm, ein Computerprogrammprodukt und eine Verwendung eines Verfahrens zur Verarbeitung von Stereo-Video-basiert gewonnenen Rohbilddaten, die in mindestens zwei Rohbilddatenbildern vorliegen, wobei zu im Wesentlichen allen Rohbilddaten jeweils mindestens eine korrespondierende Entfernungsinformation, insbesondere eine Disparitätsinformation vorhanden ist, zur Durchführung einer bilddatenabhängigen Aufgabe, umfassend die Schritte: Übermitteln der Rohbilddaten an eine Verarbeitungseinheit und Verarbeiten der Rohbilddaten, wobei im Wesentlichen alle Rohbilddaten vor dem Verarbeiten in Bezug auf ihre Entfernungsinformationen klassifiziert werden, um einen Aufwand für die weitere Verarbeitung durch die Klassifizierung der Bildpunkte zu reduzieren.

## Beschreibung

Die Erfindung betrifft ein Verfahren zur Verarbeitung von Stereo-Video-basiert gewonnenen Rohbilddaten, die in mindestens zwei Rohbilddatenbildern vorliegen gemäß dem Oberbegriff des Anspruchs 1. Weiter betrifft die Erfindung ein Computerprogramm gemäß Anspruch 9. Auch betrifft die Erfindung ein Computerprogrammprodukt nach Anspruch 10. Darüber hinaus betrifft die Erfindung eine Verwendung des Verfahrens nach Anspruch 11.

### Stand der Technik

Die Erfindung geht aus von einem Verfahren, einem Computerprogramm, einem Computerprogrammprodukt und einer Verwendung des Verfahrens zur Verarbeitung von Stereo-Video-basiert gewonnenen Rohbilddaten, die in mindestens zwei Rohbilddatenbildern vorliegen, nach Gattung der unabhängigen Ansprüche. Gegenstand der vorliegenden Erfindung ist auch die Visualisierung von Rohbilddaten, zum Beispiel in Fahrerassistenzsystemen, Überwachungskamera-Systemen, Kamerasystemen für ein Flugzeug oder Fluggerät, Kamerasysteme für ein Wasserfahrzeug oder Unterwasserfahrzeug und dergleichen, bei denen Bilddaten dargestellt werden.

Rohbilddaten, welche durch ein System, beispielsweise ein Stereo-Videobasiertes System gewonnen werden, müssen für eine weitere Nutzung, zum Beispiel in einem Fahrerassistenzsystem oder dergleichen, weiterverarbeitet werden. Hierzu werden die Rohdaten mittels Erkennungsverfahren gruppiert und/oder zu Objekten transformiert. Diese Objekte können dann weiter in verschiedene Klassen eingeteilt - also klassifiziert - werden, beispielsweise in für eine Fahraufgabe relevante und irrelevante Klassen. Unter Klassifizierung versteht man allgemein die Zuordnung von Objekten zu bestimmten Objektklassen anhand verschiedener Kriterien.

Aus der WO 2005/034062 A1 ist ein Verfahren zur Bewertung und zeitlichen Stabilisierung von Klassifizierungsergebnissen bekannt, wobei zu klassifizierende Objekte über einen Zeitraum hinweg sensorisch erfasst und wiederholt unter Einbeziehung von Gütemaßen je Objektklasse klassifiziert werden. Um für bessere Klassifizierungssicherheit zu sorgen, werden dabei die folgenden Schritte durchgeführt: Aufwerten des Konfidenzmaßes, wenn eine nachfolgende Klassifizierung das Ergebnis einer vorherigen Klassifizierung bestätigt, Abwerten des Konfidenzmaßes, wenn eine nachfolgende Klassifizierung das Ergebnis einer vorherigen Klassifizierung nicht bestätigt, Erzeugen eines endgültigen Klassifizierungsergebnisses unter Einbeziehung der auf- oder abgewerteten Konfidenzmaße. Das Verfahren bestätigt insbesondere klassifizierte Objekte, das heißt Daten, die zu einem Objekt transformiert oder gruppiert sind.

### Offenbarung der Erfindung

Das erfindungsgemäße Verfahren, das erfindungsgemäße Computerprogramm und das erfindungsgemäße Computerprogrammprodukt sowie die Verwendung des Verfahrens zur Visualisierung von Bilddaten mit den Merkmalen des jeweils entsprechenden Hauptanspruchs haben demgegenüber den Vorteil, dass (Bild)Daten bzw. ein daraus erzeugtes Bilddatenbild direkt, das heißt ohne Objektgruppierung oder -transformation, verarbeitet werden. Die Verarbeitung erfolgt in Bezug auf zu einzelnen Bilddaten oder Rohbilddaten vorliegenden Entfernungsinformationen, die bezüglich der Bilddaten vorliegen. Im Wesentlichen liegt zu jedem Bildpunkt eine Entfernungsinformation, bevorzugt eine Disparität, vor. Unter Disparität versteht man im Allgemeinen den sich bei Verwendung eines Stereo-Video-Kamerasystems ergebenden Versatz der zu einem Weltpunkt auf den unterschiedlichen Kamerabildern resultierenden Bildpunkte, wobei jeder Bildpunkt und/oder jede Disparität in einer eindeutigen Beziehung zu der jeweiligen Entfernung des Weltpunktes zur Kamera steht.

Beispielsweise kann die Disparität bezogen werden auf die Brennweite der Kameras und sich als Quotient aus dem Versatz der zu einem Weltpunkt korrespondierenden Bildpunkte, ausgedrückt in Bildkoordinaten, und der Brennweite der Kamera ergeben. Die Disparität ist dabei reziprok zu der Entfernung des Weltpunktes von einer Bezugsstelle wie einem Bezugspunkt, einer Bezugsfläche (z.B. im Falle rektifizierter Kameras), einer Bezugsoberfläche und dergleichen, und kann unter Berücksichtigung der Basisweite der Kameras untereinander, das heißt dem Abstand der Kameras etwa als folgendes Verhältnis angegeben werden: Der Quotient aus Disparität und Kamerabrennweite entspricht dem Quotienten aus Basisweite und Entfernung des Weltpunktes. Der Weltpunkt entspricht dem realen Punkt eines Objektes einer Umgebung. Die Bildpunkte repräsentieren den mittels Sensoren erfassten Weltpunkt in einem Kamerabild oder Bilddatenbild, zum Beispiel einem Pixelbild, welcher durch x- und y- Koordinaten in dem Pixelbild festgelegt ist. Alle Bilddaten werden entsprechend ihrer Disparität und ihrer Position, angegeben in x-Koordinaten und y-Koordinaten, bevorzugt in einem kartesischen Koordinatensystem, jeweils einer Klasse zugeordnet, d.h. klassifiziert, insbesondere gleich gekennzeichnet, und so einem Benutzer angezeigt und/oder einer Weiterverarbeitungseinrichtung übermittelt. Somit lässt sich eine schnellere Klassifizierung und damit eine schnellere Verarbeitung von (Roh-)Daten realisieren. Zudem gewinnt die zweidimensionale Darstellung auf einem Display an Informationsgehalt, indem die nicht darstellbare Tiefenrichtung durch die Überlagerung zusätzlich dargestellt wird. Das Verfahren lässt sich auf Bilddaten eines Disparitätsbildes anwenden. Rohbilddaten, etwa zur Erzeugung eines Kamerabildes lassen sich nach entsprechender Verarbeitung zu einem Disparitätenbild verwenden, können nach der Verarbeitung verworfen werden oder in Kombination mit dem Disparitätenbild verwendet werden.

Durch die in den abhängigen Ansprüchen aufgeführten Maßnahmen sind vorteilhafte Weiterbildungen und Verbesserungen der in den unabhängigen Ansprüchen angegebenen Vorrichtungen möglich.

Besonders vorteilhaft ist es, dass das Klassifizieren derart durchgeführt wird, dass die (Roh-)Bilddaten in mehrere Klassen, bevorzugt in mindestens zwei Klassen, weiter bevorzugt in mindestens drei Klassen, unterteilt/eingeteilt werden. Anhand der Klasseneinteilung in zwei oder mehr, zum Beispiel drei, Klassen lassen sich zum Beispiel bei einem Fahrerassistenzsystem, bei dem Bildpunkten aus einer Fahrzeugumgebung Disparitäts- bzw. Entfernungsinformationen zugeordnet werden, einfach die folgenden Aussagen treffen: Der entsprechende Bildpunkt entspricht einem realen Punkt oder einem Weltpunkt, der im Wesentlichen zu einer Ebene, Oberfläche oder beispielsweise einer Fahrbahn bzw. jeweils einem Toleranzbereich hierzu gehört, in welcher sich ein Nutzer, wie ein Fahrzeug, befindet und/oder bewegt. Das heißt, dieser Weltpunkt liegt in einer Bezugsklasse oder in einer Bezugsebene. Dabei entspricht die reale Fahrbahnoberfläche nur näherungsweise einer Ebene. Tatsächlich ist diese mehr oder weniger gekrümmt. Deshalb wird unter Bezugsebene auch eine Bezugsfläche oder Bezugsoberfäche verstanden, die im Wesentlichen, d.h. angenähert, eben ausgebildet ist. Sofern sich das Fahrzeug auf dieser Bezugsebene oder Bezugsfläche bewegt oder sich in, an oder auf dieser Bezugsebene befindet, besteht keine Kollisionsgefahr zwischen dem Fahrzeug und der als zur Bezugsebene gehörig klassifizierten Punkte. Weiter kann der Bildpunkt einem Weltpunkt entsprechen, der außerhalb, insbesondere oberhalb oder unterhalb der Bezugsebene oder Bezugsklasse liegt. Der Punkt kann dabei eine solche Höhe oder Entfernung von der Bezugsebene aufweisen, dass die Möglichkeit einer Kollision mit dem Punkt besteht. Der entsprechende Weltpunkt ist demnach ein Teil eines Hindernisses. Nach entsprechender Verarbeitung der Daten kann eine Warnung ausgegeben oder es können andere entsprechende Maßnahmen eingeleitet werden. Auch kann der Bildpunkt einem Weltpunkt entsprechen, der soweit beabstandet von der Bezugsebene liegt, dass keine Möglichkeit einer Kollision oder einer Störung besteht. Die Situationen können sich entsprechend eines Zeit- und/oder Bewegungsablaufes ändern, sodass wiederholte Klassifizierungen der Bilddaten durchgeführt werden. Dieses erfindungsgemäße Verfahren erfordert keine Trainingsphasen. Die Klassifikation erfolgt ohne jegliche Kenntnis über das Aussehen von Objekten. Es müssen keine Vorabinformationen über Eigenschaften wie Größe, Farbe, Textur, Form etc. vorliegen, sodass auch auf neue Umgebungssituationen schnell reagiert werden kann.

Noch ein Vorteil der vorliegenden Erfindung ist es, dass das Klassifizieren der (Roh-)Bilddaten in Zwischenklassen durchgeführt werden kann, wenn die (Roh-)bilddaten in unterschiedliche Klassen klassifizierbar sind, zum Beispiel wenn ein Disparitätswert nahe an einer entsprechenden Entscheidungsschwelle für eine Klassifizierung liegt, das heißt, wenn keine sichere Klassifizierung möglich ist, nicht genügend Informationen vorliegen, Störungen auftreten oder die Grenzen nicht scharf festgelegt sind. Auch wenn ein Weltpunkt nur auf einem Bilddatenbild dargestellt ist, lässt sich dieser Bilddatenwert einer Zwischenklasse zuordnen. So kann statt einer scharfen Trennung der vorbestimmten Klassen auch eine weiche Trennung durchgeführt werden. Dabei kann die Trennung weich, das heißt kontinuierlich, durchgeführt werden oder aber auch gestuft in einer oder mehrerer Klassen.

In einer besonderen bevorzugten Ausführungsform ist vorgesehen, dass die (Roh-)Bilddaten in zur Lösung einer Fahraufgabe relevante Klassen klassifiziert werden, insbesondere ausgewählt aus der Gruppe an Klassen umfassend: Kollisionsgefahr, keine Kollisionsgefahr, flach, steil, Hindernis, in einem Bereich eines Bezugs, unterhalb eines Bezugs, oberhalb eines Bezugs, relevant, irrelevant, unbekannt, nicht zuzuordnen und dergleichen. Auf diese Weise lässt sich eine äußerst schnelle Verarbeitung der (Roh-)Bilddaten gewährleisten, die beispielsweise dem Fahrer auf eine leicht verständliche Weise zugänglich gemacht werden können, zum Beispiel angezeigt werden können. Durch die Klassifizierung erfolgt eine Informationsreduktion, sodass für die weitere und schnellere Verarbeitung nur die relevanten Daten verarbeitet werden müssen und entsprechend schnell reagiert werden kann.

Weiterhin vorteilhaft ist es, dass die (Roh-)Bilddatenbilder vor der Disparitätsbestimmung und/oder dem Klassifizieren zumindest teilweise rektifiziert werden. Insbesondere ist es vorteilhaft, wenn eine epipolare Rektifizierung durchgeführt wird. Das Rektifizieren erfolgt vorzugsweise derart, dass sich der zu einem Bildpunkt in einer Zeile y eines ersten Bilddatenbildes, zum Beispiel einer ersten Kamera, korrespondierende Bildpunkte eines zweiten Bilddatenbildes, zum Beispiel einer zweiten Kamera, in der gleichen Zeile y im Bilddatenbild des zweiten Bildes befindet, wobei hier ohne Beschränkung der Allgemeinheit angenommen wird, dass die Kameras nebeneinander angeordnet sind. Aus einer Berechnung der Verschiebung der sogenannten Disparitäten der beiden Punkte entlang der x-Achse, kann dann auf die Entfernung des Weltpunktes von den Kameras geschlossen werden und eine entsprechende Entfernungsinformation zu jedem Bildpunkt generiert werden. Besonders vorteilhaft ist es, wenn eine Vollrektifizierung durchgeführt wird, sodass der Zusammenhang zwischen der Disparität und der Entfernung für alle Bildpunkte gleich ist.

Insbesondere ist es vorteilhaft, dass die Klassifizierung in Bezug auf die Entfernungsinformationen das Klassifizieren hinsichtlich einer Distanz von einem Bezug in unterschiedliche Raumrichtungen umfasst. Somit lässt sich ein Disparitätsraum berechnen, anhand dem eine geeignete Klassifizierung der Bilddaten der realen Umwelt einfach vorgenommen werden kann. Der Disparitätsraum kann durch die unterschiedlichen, beliebig wählbaren Raumrichtungen aufgespannt werden. Vorzugsweise werden die Raumrichtung entsprechend einem geeigneten Koordinatensystem gewählt, beispielsweise einem, das durch eine x-Achse, eine y-Achse und eine d-Achse (Disparitätenachse) aufgespannt wird, wobei auch andere geeignete Koordinatensysteme gewählt werden können.

Zudem ist es vorteilhaft, dass aus den Bilddaten mindestens ein Bezug ausgewählt aus der Gruppe der Bezüge umfassend: einen Bezugspunkt, eine Bezugsebene, eine Bezugsfläche, eine Bezugsoberfläche, einen Bezugsraum, einen Bezugshalbraum und dergleichen, insbesondere eine Bezugsfläche oder eine Bezugsebene ermittelt wird. Bevorzugt wird benachbart zu der Bezugsebene eine Toleranzbereich bestimmt. Bildpunkte, die in diesem Toleranzbereich liegen, werden als zu der Bezugsebene gehörig bestimmt.

Insbesondere ist es vorteilhaft, dass die Bezugsebene oder Bezugsfläche als eine hinsichtlich ihrer Orientierung, ihrer Lage, ihrer Krümmung sowie Kombinationen und dergleichen daraus beliebige Bezugsebene ermittelt wird. Beispielsweise kann eine Bezugsebene senkrecht oder waagerecht bzw. vertikal oder horizontal in der Welt stehen. Auf diese Weise lassen sich beispielsweise Objekte in einem Fahrschlauch oder einem Fahrpfad von Objekten von dazu versetzen Objekten, beispielsweise links und rechts daneben, abtrennen. Die Bezugsebenen können beliebig kombiniert werden, beispielsweise eine waagerechte Bezugsebene und eine senkrechte Bezugsebene. Ebenfalls können schräge Bezugsebenen bestimmt werden, zum Beispiel um eine Treppe oder eine Schräge von entsprechenden Objekten auf der Treppe oder der Schrägen zu trennen. Es ist zudem möglich, beliebig gekrümmte Oberflächen als Bezugsebene zu verwenden. So können beispielsweise relevante und oder interessante Objekte wie Personen auf einem Hügel oder einer Böschung von nicht relevanten oder nicht interessanten, zum Beispiel dazu entfernt versetzten, Objekten oder Personen auf einfache Weise unterschieden werden. Eine mögliche Bezugsebene oder Bezugsfläche ist zum Beispiel eine Fahrbahnoberfläche. Parallel dazu, zum Beispiel 2 m höher als das Fahrzeug kann eine zweite Ebene definiert werden. Andere Bezugsebenen können senkrecht orientiert sein, zum Beispiel senkrecht auf Fahrbahnmarkierungen, Randsteinen oder dergleichen. Entsprechend kann eine entsprechende Bezugsebene dann Objekte auf der einen, bevorzugt der eigenen, Fahrspur von anderen Objekten trennen. Bevorzugt können gekrümmte Flächen als Bezug auch unterschiedlich dazu orientiert sein.

Vorteilhaft lässt sich das Verfahren als Computerprogramm und/oder Computerprogrammprodukt realisieren. Hierunter sind alle Recheneinheiten zu fassen, insbesondere auch integrierte Schaltkreise wie FPGA's (Field Programmable Gate Arrays), ASIC's (Application Specific Integrated Circuit), ASSP's (Application Specific Standard Products), DSP's (Digital Signal Processor) und dergleichen sowie fest verdrahtete Rechenbausteine.

Das Verfahren lässt sich in anderen Verfahren, Vorrichtungen, Systemen Computerprogrammen und Computerprogrammprodukten zur Visualisierung von Bilddaten umsetzen. So kann zum Beispiel vorgesehen sein, dass mittels des erfindungsgemäßen Verfahrens Bilddaten bzw. ein daraus erzeugtes Bilddatenbild einem Benutzer mit korrespondierenden Zusatzinformationen, wie beispielsweise Entfernungsinformationen, angereichert, insbesondere überlagert übermittelt werden. Durch diese zusätzlichen Informationen wie Entfernungsinformationen oder sonstigen Informationen, zum Beispiel zur Erfüllung einer Fahraufgabe (Bremsen, Beschleunigen, Folgen etc.) kann der Benutzer die Relevanz der Bilddaten, Objekte und dergleichen direkt erkennen. Der Benutzer kann somit durch die überlagerte Darstellung von Zusatzinformationen (Entfernungsinformationen etc.) und Bilddaten die zusätzliche Information schneller erfassen. Relevante Daten, Störungen etc., zum Beispiel beim Erfüllen einer Aufgabe, beispielsweise einer Fahraufgabe, lassen sich geeignet hervorheben, sodass der Benutzer diese intuitiv wahrnehmen kann und entsprechend reagieren kann, auch bei einer erhöhten Informationsdichte. Die Visualisierung kann mittels des erfindungsgemäßen Verfahrens ohne Erkennung von Objekten durchgeführt werden, da zu mindestens einem Bildpunkt, im Wesentlichen jedem Bildpunkt oder allen Bilddaten jeweils mindestens eine Zusatzinformation dargestellt wird. Somit lässt sich eine schnellere Visualisierung realisieren. Nicht zuletzt ist eine ästhetisch ansprechende Darstellung von relevanten Informationen möglich. Zusatzinformationen können nach Durchführung des erfindungsgemäßen Verfahrens klassifiziert dargestellt werden, insbesondere durch eine unterschiedliche Färbung, Textur, Aufhellung, Abdunklung, Schärfung, Vergrößerung, Kontrastanhebung, Kontrastabsenkung, Auslassung, virtuelle Beleuchtung, invertiert, verzerrt, abstrahiert, mit Konturen, zeitlich veränderlich (bewegen, blinken, vibrieren, wackeln) und dergleichen, sowohl einzeln als auch in Kombination, je Klassifizierung. Durch die Klassifizierung lassen sich die relevanten Informationen für einen Benutzer übersichtlicher über das Bilddatenbild überlagert darstellen. Zudem ermöglicht die Klassifizierung eine schnellere und einfachere Verarbeitung der Kombination Bilddaten und Zusatzinformationen. Störungen, Details oder weitere Informationen lassen sich den entsprechenden Klassen entnehmen, sodass eine Suche, insbesondere eine visuelle Suche, in allen Bilddaten überflüssig ist, wodurch die Verarbeitungsgeschwindigkeit erhöht und/oder die visuelle Erfassung beschleunigt wird. Weiter können die Zusatzinformationen zusätzlich in einer verarbeiteten Darstellung zumindest teilweise über und/oder neben den Bilddaten dargestellt werden, insbesondere als Histogramm oder dergleichen. Somit lässt sich die Vielzahl an Informationen (Bild-, Entfernungs- und auch weitere Informationen) komprimiert und leicht verständlich für den Benutzer und insbesondere auch zur weiteren Verarbeitung darstellen. Auch lassen sich die Zusatzinformationen und/oder die Bilddaten geglättet dargestellen. Hierbei werden die klassifizierten Informationen an den Grenzen zu benachbarten Klassen unscharf dargestellt. Insbesondere bei Bildstellen, an denen ein wesentlicher Sprung von einer Klasse in eine andere vorkommt, ist dies vorteilhaft. Auf diese Weise kann eine fließende Hervorhebung oder Darstellung realisiert werden. Es wird bei der Darstellung somit ein weicher Übergang, zum Beispiel ein optisch weicher Übergang, realisiert. Die Zusatzinformationen lassen sich zeitlich vor einer Anreicherung oder einer Überlagerung mit dem Bild glätten. Hierdurch lassen sich auch vorteilhaft Fehler ausmitteln. Die Glättung kann sowohl zeitlich, örtlich oder zeitlich und örtlich erfolgen. Die Glättung ermöglicht die Reduktion des Informationsgehaltes auf ein geeignetes Maß. Um einen mit der Glättung verbundenen Unschärfeeindruck zu minimieren oder verhindern, können zusätzliche Linien und/oder Konturen, beispielsweise Objektkanten, Objektkonturen etc. dargestellt werden, beispielsweise unter Verwendung eines Canny-Algorithmus, der zum Beispiel dominante Kanten des Kamerabildes findet und bereitstellt. Zu einer scharfen Lokalisierung unscharfer Zusatzinformationen können bei dem erfindungsgemäßen Verfahren oder dessen Anwendung Übergänge, zum Beispiel Kanten von Objekten, dargestellt werden. Hiermit lassen sich trotz einer Unschärfe, beispielsweise der Färbungen, klare, scharfe Visualisierungen erzeugen. Das Verfahren lässt sich in einer Vorrichtung und einem System zur Visualisierung von Bilddaten verwenden, wobei die Vorrichtung und das System Mittel zur Umsetzung des Verfahrens aufweisen, wobei die Mittel mindestens eine Anzeigeeinrichtung umfassen, die ausgebildet ist, weitere Informationen wie Zusatzinformationen und dergleichen angereichert oder überlagert zu Bilddaten darzustellen. Dies hat den Vorteil, dass durch die Verwendung bzw. die Umsetzung des Verfahrens eine schnelle und leicht verständliche Informationsaufbereitung bei einer ästhetisch ansprechenden Ausführung für den Benutzer realisierbar ist. Die Mittel können eine Anzeigeeinrichtung umfassen, die ausgebildet ist, weitere Informationen wie Zusatzinformationen und dergleichen angereichert und/oder überlagert zu Bilddaten darzustellen. Die Zusatzinformationen umfassen sämtliche Informationen, zum Beispiel auch solche, die mit der Entfernung oder einem Abstand zu tun haben. Hierunter sind auch daraus abgeleitete Informationen zu fassen. Beispielhaft können dies Abstandsänderungen, zum Beispiel über die Zeit, sein, Abstand dividiert durch Abstandsänderungen (auch TTC - Time to Collision) und dergleichen. Die Informationen können allgemein auch zum Beispiel andere Daten umfassen, die in geeigneter Form mit Bilddaten überlagert dargestellt werden. Die Vorrichtung bzw. das System kann vorzugsweise mindestens eine Schnittstelle zur Kopplung an anzuschließende Systemkomponenten wie die eines Fahrerassistenzsystems, eines Kraftfahrzeugs, weiterer Sensoren und dergleichen aufweisen. Hierdurch ergeben sich zahlreiche Einsatzmöglichkeiten zur optimierten Lösung von entsprechend unterstützten Aufgaben.

### Kurze Beschreibung der Zeichnungen

Ausführungsbeispiele der Erfindung sind in den Zeichnungen dargestellt und in der nachfolgenden Beschreibung näher erläutert.

Es zeigen:
- Figur 1: schematisch zwei Kamerabilder eines Stereo-Video-Systems und ein Disparitätenbild für das Bild der linken Kamera.
- Figur 2: schematisch ein Kamerabild mit einem gekennzeichneten Ausschnitt für eine Bezugsebenenschätzung.
- Figur 3: schematisch Diagramm mit dem Ergebnis einer Geradenregression zur Schätzung der Bezugsebene.
- Figur 4: schematisch die Darstellung der Vorschrift, nach der der jeweilige Bildpunkt aus Zeile y mit der Disparität d einer der verschiedenen Klassen zugeordnet wird, in einem Schnitt durch einen Disparitätsraum.
- Figur 5: schematisch die Darstellung einer Klassifizierung von Bildpunkten anhand Entfernungsinformationen (Disparitäten).

### Ausführungsformen der Erfindung

Das vorliegende Verfahren, das Computerprogramm, das Computerprogrammprodukt und die Verwendung des Verfahrens zur Verarbeitung von Stereo-Video-basiert gewonnenen Rohbilddaten, die in mindestens zwei Rohbilddatenbildern vorliegen, kann in beliebigen Anwendungen angewendet werden, wie in einem Fahrerassistenzsystem, insbesondere in einem Einparkhilfesystem, in einem Adaptive-Cruise-Control-System, in einem Querführungssystem, in einem Warnsystem, in einem zumindest teilweise automatischem Abstandsregelsystem, in einem zumindest teilweise automatischem Querführungssystem, in einem Blind-Spot-Assistenzsystem, in einem Überwachungskamera-System, in einem Kamerasystem für ein Flugzeug und/oder Fluggerät, in einem Kamerasystem für ein (Unter-)Wasserfahrzeug und dergleichen. Die vorliegende Erfindung ist vorliegend insbesondere für ein Fahrerassistenzsystem dargestellt.

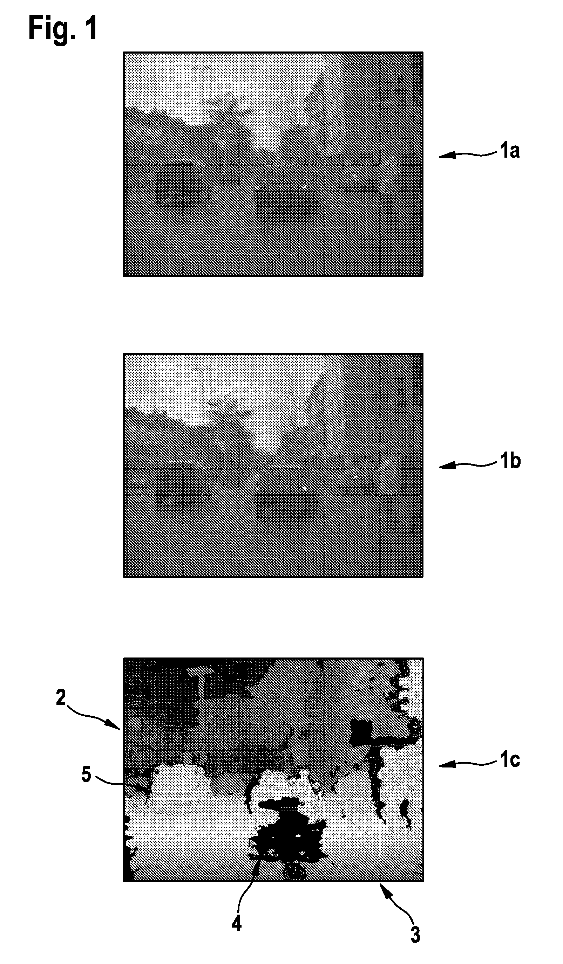

Figur 1 zeigt schematisch zwei Kamerabilder 1a, 1b eines Stereo-Video-Systems und ein Disparitätenbild 1c, d.h. ein Bild, in welchem Disparitäten dargestellt sind, für das Bild der linken Kamera 1a. Die beiden Kamerabilder 1a, 1b, die als Pixelbilder mit Bildpunkten vorliegen, sind jeweils vollrektifiziert. In dem unteren Bild, dem Disparitätenbild 1c, liegt zu im Wesentlichen jedem Bildpunkt eine Disparität vor. Die Disparitäten sind vorliegend durch Farben kenntlich gemacht, können aber auch auf andere Weise unterschiedliche gekennzeichet werden, beispielsweise durch Helligkeiten, Texturen, Schraffuren etc. In dem Beispiel sind die Disparitäten, die bei einer sehr großen Entfernung Richtung unendlich tendieren, dunkelblau dargestellt (bei Bezugszeichen 2). Generell kann die Farbgebung willkürlich erfolgen. Vorliegend werden weiten Entfernungen von der Kamera die kälteren Farben (d. h., die Farben mit höherer Wellenlänge, vorliegend dunkelblau) und den näher zur Kamera gelegenen Entfernungen die wärmeren Farben (d. h. die Farben mit kleinerer Wellenlänge) zugeordnet, wobei die Zuordnung beliebig gewählt werden kann. Die Farbe Rot repräsentiert entsprechend kürzere Entfernungen (bei Bezugszeichen 3) , Gelb über Grün bis Blau repräsentieren die Entfernungen dazwischen, jeweils mit wachsender Entfernung. Die Zuordnung der Farbe Schwarz (bei Bezugszeichen 4) bedeutet, dass für den entsprechenden Bildpunkt keine Disparität bestimmt werden konnte, zum Beispiel wegen einer Verdeckung, wegen einer schwachen Textur, wegen Mehrdeutigkeit oder wegen fehlender Korrespondenz. Zusätzlich sind in dem Disparitätenbild in dem Originalbild gefundene Helligkeitskanten 5 eingeblendet. Selbstverständlich ist auch die Verwendung von unbunten Farben, Texturen, Schraffuren und dergleichen denkbar, bunte Farben sind jedoch im Allgemeinen für den jeweiligen Nutzer in ihrer Unterschiedlichkeit schneller erfassbar.

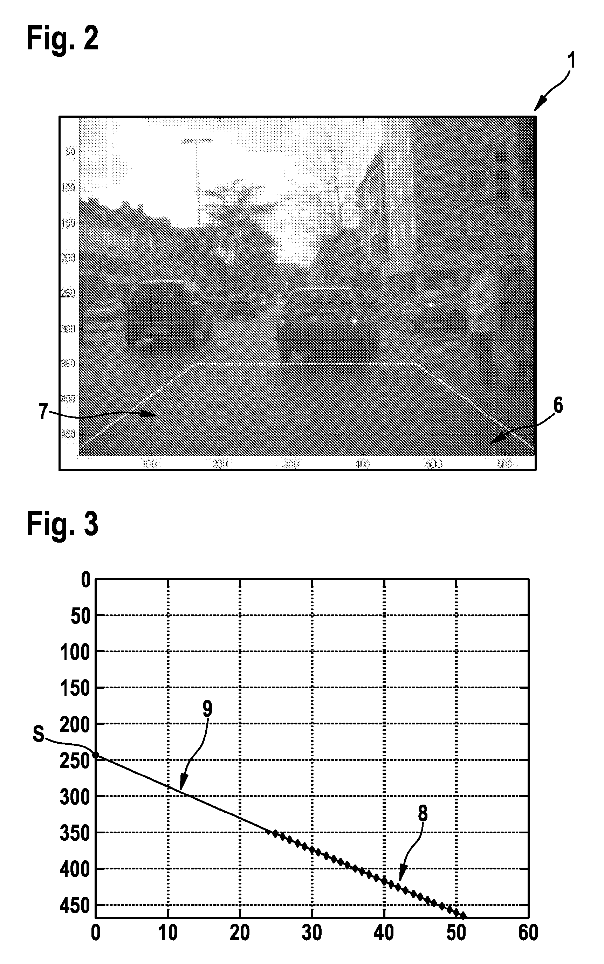

Figur 2 zeigt schematisch ein Kamerabild 1 mit einem gekennzeichneten Ausschnitt 6 für eine Bezugsebenenschätzung. Die Bezugsebenenschätzung ist für das erfindungsgemäße Verfahren optional durchführbar. Bei einem Fahrerassistenzsystem, bei welchem eine mögliche Kollisionsgefahr angezeigt werden soll, besteht die Bezugsebenenschätzung darin, dass der Verlauf der befahrbaren Oberfläche der Fahrbahn 7 geschätzt wird. Nach der Schätzung wird bei Verwendung eines Stereo-Kamera-Systems die Position der Kameras (Lage, Orientierung) relativ zu der Bezugsebene bestimmt. Die Bezugsebene umfasst, wie schon zuvor aufgeführt, allgemein Bezugsstellen wie Bezugspunkte, Bezugsflächen, Bezugsoberflächen und dergleichen. Analog gilt dies für Begriffe wie Bezugsebenenschätzung und dergleichen. Die Bezugsebene kann als eine plane, eben Fläche einen Sonderfall der Bezugsstelle oder der Bezugsfläche darstellen. Die real im dreidimensionalen Raum existierende Fahrbahnebene 7 lässt sich in einem Disparitätenraum mit x-Koordinaten, y-Koordinaten und Disparitätskoordinaten, das heißt einer Tiefeninformation, darstellen. Dann lässt sich die Ebenenschätzung auch direkt in dem Disparitätenraum durchführen. Bei rektifizierten Kamerabildern und bei Setzen eines Bildhauptpunktes beider Kamerabilder auf die Koordinate x=0 und y=0, ergibt sich die Disparität d aus der Differenz der Spaltenkoordinaten des linken und des rechten Bilds, genauer als x_{L}-x_{R}, wobei x_{L} die x-Koordinate des linken Bildes und x_{R} die x-Koordinate des rechten Bildes darstellt. Hieraus ergibt sich dann die bekannte Stereo-Beziehung (x_{L}-x_{R})/f = d/f = b/Z. Die in dem gekennzeichneten Bereich 6 bestimmten Disparitäten werden für die Schätzung verwendet. Als Schätzverfahren kann beispielsweise eine Ebenenregression oder eine Hough-Transformation oder eine Geraden-Regression, wie in Fig. 3, verwendet werden.

Figur 3 zeigt schematisch ein Diagramm mit dem Ergebnis einer Geradenregression zur Schätzung der Bezugsebene. Hierbei wurde in den Bildzeilen eines Kamerabildes 1 ab Werten von 350 Einheiten, wobei vorliegend eine Einheit einer Bildzeilennummer entspricht, insbesondere bei einer Zählung beginnend mit 1 an einer obersten Bildzeile, jeweils der Median der Disparität ermittelt, der hier jeweils als schwarzer Punkt (bei Bezugszeichen 8) eingetragen ist. Die (rot dargestellte) Regressionsgerade 9 (bzw. die Regressionsebene) stellt die Lage der Ebene im Disparitätenraum dar. Der Schnittpunkt mit der Ordinate S entspricht einem Horizontpunkt bzw. der Horizontlinie im Bild, die sich durch die unendliche Fortsetzung der geschätzten Ebene ergäbe. Eine derartige Ebene kann für jedes Bildpaar der stereo-video-basiert erfassten Rohdaten neu bestimmt werden. Dies ist dann möglich, wenn der ausgewählte Bildbereich signifikante Anteile der entsprechenden Ebene enthält. Andernfalls wird eine vorbestimmte Lage der Ebene verwendet, zum Beispiel eine Einbaulage. Die Lage der Ebene kann auch über Höhenstandssensoren, zum Beispiel eines Fahrzeugs, bestimmt werden. Die Schätzung der Bezugsebene oder der Oberfläche (zum Beispiel einer Fahrbahn) ist nicht auf ein ebenes Modell beschränkt. Es können auch gekrümmte Oberflächen-Modelle wie zum Beispiel Splines, Polynome etc. verwendet werden. Liegen entsprechend viele Messdaten vor, können insbesondere auch komplexe Oberflächenverläufe gut geschätzt werden.

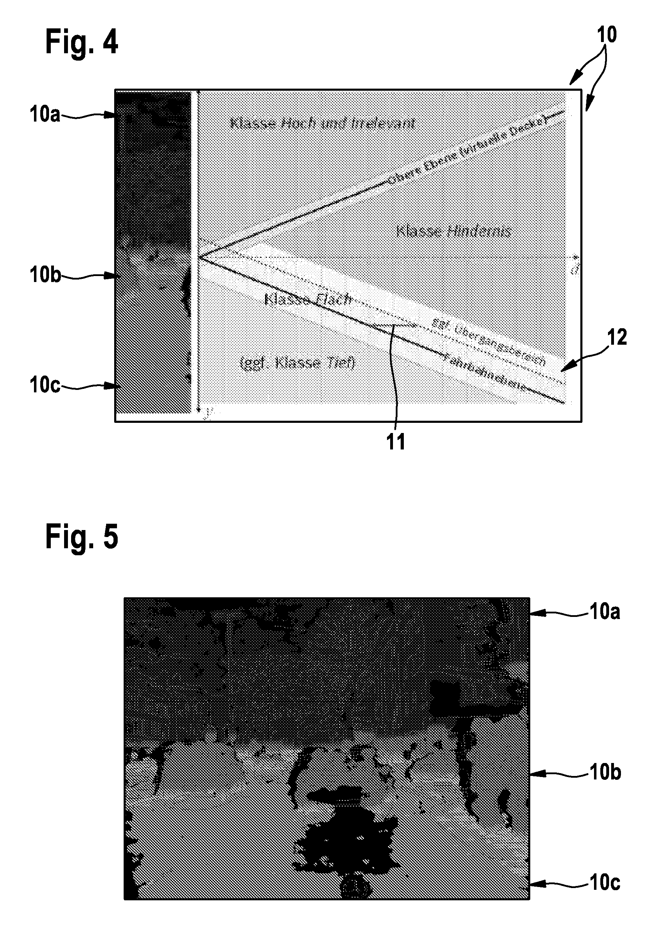

Figur 4 zeigt schematisch die Darstellung verschiedener Klassen 10 in einem Schnitt durch einen Disparitätsraum. Der Schnitt erfolgt im Disparitätenraum für einen konstanten Wert der x-Koordinate, der vorliegend aufgetragen ist als Bildzeile y über der Disparität d. Links neben dem Diagramm ist ein Ausschnitt eines Bildes dargestellt, das farblich in drei Klassen unterteilt ist, eine erste Klasse 10a, beispielsweise durch eine blaue Farbe gekennzeichnet: "Hoch und Irrelevant", eine zweite Klasse 10b, beispielsweise durch eine rote Farbe gekennzeichnet: "Hindernis", und eine dritte Klasse 10c, beispielsweise durch eine grüne Farbe gekennzeichnet: "Flach". In anderen Worten wird vorliegend eine Klassifizierung in die Klassen "Flach", "Hindernis", und "Hoch und irrelevant" vorgenommen. Die Trennung zwischen der Klasse "Flach" und der Klasse "Hindernis" erfolgt durch eine gedachte Ebene (oder auch eine komplexere Fläche), die um einen vorbestimmten Wert oberhalb der Fahrbahnebene (z.B. Fahrbahnoberfläche) liegt. Der Abstand zwischen den beiden Ebenen, der Bezugsebene und der dazu beabstandeten, gedachten Ebene, ist dabei so gewählt, dass Weltpunkte, die tatsächlich zur Fahrbahnebene gehören, auch bei einem Auftreten typischer Messfehler, zum Beispiel des Stereo-Video-Verfahrens, möglichst immer, wenn auch gerade noch, der Klasse "Flach" zugeordnet sind. Unter der Annahme, dass der Fehler der Disparitätsschätzung unabhängig von der Bildkoordinate ist, bedeutet dies, dass im dreidimensionalen Disparitätsraum ein konstanter Abstand zwischen dem Abbild der Fahrbahnebene und der Trennebene zu wählen ist. Dieser konstante Abstand ist in Fig. 4 als Disparitätsabstand durch den vorzugsweise roten Abstandspfeil 11 zwischen der Fahrbahnebene und der Trennebene gekennzeichnet. Weiter vorgesehen ist mindestens ein Zwischenbereich oder Übergangsbereich 12, in welchem Werte angeordnet sind, von denen nicht sicher ist, welcher benachbarten Klasse sie zuzuordnen sind. Ein anderer Übergangsbereich besteht zum Beispiel zwischen der Klasse "Hindernis" und der Klasse "hoch". Auch lässt sich eine Klasse "tief" bestimmen. In diese Klasse lassen sich zum Beispiel Straßengräben, Schlaglöcher, Abgründe und dergleichen klassifizieren.

Figur 5 zeigt schematisch die Darstellung einer Klassifizierung von Bildpunkten anhand Entfernungsinformationen (Disparitäten) für ein Fahrerassistenzsystem. Die drei Klassen "Hoch und Irrelevant" (vorzugsweise blau gekennzeichnet) 10a, "Hindernis" (vorzugsweise rot gekennzeichnet) 10b und "Flach" (vorzugsweise grün gekennzeichnet) 10c sind unterschiedlich eingefärbt. Übergangsbereiche zwischen den drei Klassen sind entsprechend abweichend dargestellt.

Eine Visualisierung des Verfahrens ist nicht erforderlich. Vielmehr kann die Klassifizierung unabhänig von einer Visualisierung zum Beispiel intern in einer Recheneinheit durchgeführt werden. Entsprechend lassen sich ohne Visualisierung mit dem Verfahren relevante Hindernisse unabhängig von ihrem Aussehen erkennen. Somit lässt sich das Verfahren auch als initialer Verarbeitungsschritt in einem System einsetzen, das Objekte erkennt und verfolgt, um geeignet auf diese zu reagieren. Beispielhaft lässt sich das Verfahren in den folgenden Systemen einsetzen:
- ACC-System (adaptive cruise control), das auf vorausfahrende Fahrzeuge reagiert, Abstände regelt, beschleunigt, bremst etc.
- Querführungssystem, das ein Fahrzeug an Hindernissen vorbeiführt,
- (Abstands-)Warnsystem, das nicht selbstständig eingreift, jedoch den Fahrer entsprechend informiert und warnt, wenn Abstände oder Entfernungen zu gering werden oder eine Gefahr absehbar ist, dass dieser Fall eintreten könnte,
- halb automatisches Abstandsregelsystem, das nicht selbstständig eingreift, sondern den Fahrer entsprechend informiert und ihm ggf. Empfehlungen zum Vergrößern/Verringern eines Abstandes gibt,
- halb automatisches Querführungssystem,
- Blind-Spot Assistenzsystem.
- Einparkhilfe- oder Rangierhilfe-System, das auf Objekte hinweist (zum Beispiel visuell, akustisch oder in anderer Form), wenn die Möglichkeit einer Kollision besteht,
- Einparkhilfe- oder Rangierhilfe-System, welches den Fahrer beim Einparken aktiv unterstützt oder diese Aufgabe ganz oder teilweise überimmt.

## Patentansprüche

1. Verfahren zur Verarbeitung von Bilddaten eines Disparitätsbildes, insbesondere eines von Stereo-Video-basiert gewonnenen Rohbilddaten, die in mindestens zwei Rohbilddatenbildern vorliegen, erzeugten Disparitätsbildes, wobei zu mindestens einem Datenpunkt der Bilddaten mindestens eine korrespondierende Entfernungsinformation, insbesondere eine Disparitätsinformation vorhanden ist, zur Durchführung einer bilddatenabhängigen Aufgabe, umfassend die Schritte:
Übermitteln der Bilddaten an eine Verarbeitungseinheit und
Verarbeiten der Bilddaten, **dadurch gekennzeichnet, dass**
im Wesentlichen alle Bilddaten vor dem Verarbeiten in Bezug auf ihre Entfernungsinformationen klassifiziert werden, um einen Aufwand für die weitere Verarbeitung aufgrund der Klassifizierung der Bildpunkte zu reduzieren.

2. Verfahren nach Anspruch 1, **dadurch gekennzeichnet, dass**
das Klassifizieren derart durchgeführt wird, dass die Bilddaten in mehrere Klassen (10a, 10b, 10c), bevorzugt in mindestens zwei Klassen, weiter bevorzugt in mindestens drei Klassen, unterteilt/eingeteilt werden.

3. Verfahren nach Anspruch 1 oder 2, **dadurch gekennzeichnet, dass**
das Klassifizieren der Bilddaten in Zwischenklassen (12) durchgeführt wird, wenn die Bilddaten in unterschiedliche Klassen (10) klassifizierbar sind.

4. Verfahren nach einem der vorherigen Ansprüche 1 bis 3, **dadurch gekennzeichnet, dass**
die Bilddaten in zur Lösung einer Fahraufgabe relevante Klassen (10) klassifiziert werden, insbesondere ausgewählt aus der Gruppe an Klassen (10) umfassend:
Kollisionsgefahr, keine Kollisionsgefahr, flach, steil, Hindernis, in einem Bereich eines Bezugs, unterhalb eines Bezugs, oberhalb eines Bezugs, seitlich eines Bezugs, relevant, irrelevant, unbekannt, nicht zuzuordnen und dergleichen.

5. Verfahren nach einem der vorherigen Ansprüche 1 bis 4, **dadurch gekennzeichnet, dass**
die Bilddatenbilder vor dem Klassifizieren zumindest teilweise rektifiziert werden.

6. Verfahren nach einem der vorherigen Ansprüche 1 bis 5, **dadurch gekennzeichnet, dass**
die Klassifizierung in Bezug auf die Entfernungsinformationen das Klassifizieren hinsichtlich einer Distanz von einem Bezug in unterschiedliche Raumrichtungen umfasst.

7. Verfahren nach einem der vorherigen Ansprüche 1 bis 6, **dadurch gekennzeichnet, dass** aus den Bilddaten mindestens ein Bezug ausgewählt aus der Gruppe der Bezüge umfassend: einen Bezugspunkt, eine Bezugsebene, eine Bezugsfläche, eine Bezugsoberfläche, einen Bezugsraum, einen Bezugshalbraum und dergleichen, insbesondere eine Bezugsfläche ermittelt wird.

8. Verfahren nach einem der vorherigen Ansprüche 1 bis 7, **dadurch gekennzeichnet, dass**
die Bezugsfläche als eine hinsichtlich ihrer Orientierung, ihrer Lage, ihrer Krümmung sowie Kombinationen und dergleichen daraus beliebige Bezugsfläche ermittelt wird.

9. Computerprogramm, umfassend Programmcodemittel zum Durchführen aller Schritte gemäß der Ansprüche 1 bis 8, wenn das Programm auf einem Computer ausgeführt wird.

10. Computerprogrammprodukt umfassend Programmcodemittel, die auf einem computerlesbaren Medium gespeichert sind, um das Verfahren nach einem der Ansprüche 1 bis 8 durchzuführen, wenn das Programmprodukt in einem Computer läuft.

11. Verwendung des Verfahrens in mindestens einer der folgenden Anwendungen:
in einem Fahrerassistenzsystem, insbesondere in einem Adaptive-Cruise-Control-System,
in einem Einpark- bzw. Rangierhilfesystem für Fahrzeuge,
in einem Querführungssystem,
in einem Warnsystem
in einem zumindest teilweise automatischem Abstandsregelsystem,
in einem zumindest teilweise automatischem Querführungssystem,
in einem Blind-Spot-Assistenzsystem,
in einem Überwachungskamera-System,
in einem Kamerasystem für ein Flugzeug und/oder Fluggerät,
in einem Kamerasystem für ein (Unter-)Wasserfahrzeug und dergleichen.
